# FASCICULE DE BREVET EUROPEEN

(11) **EP 2 839 413 B1**
(45) Date de publication et mention de la délivrance du brevet: **28.08.2019**
(21) Numéro de dépôt: 13716767.2
(22) Date de dépôt: 11.04.2013
(51) Int. Cl.: G06K 19/077

(54) **PROCÉDÉ DE MARQUAGE DE MODULE DE CARTE À PUCE PAR ÉLECTRODÉPOSITION**
VERFAHREN ZUR MARKIERUNG EINES CHIPKARTENMODULS DURCH ELEKTROABSCHEIDUNG
METHOD OF MARKING A CHIP CARD MODULE BY ELECTRODEPOSITION

(30) Priorité: 17.04.2012 FR 1201139
(43) Date de publication de la demande: 25.02.2015
(73) Titulaire: Linxens Holding, 78280 Guyancourt (FR)
(72) Inventeur: DE MAQUILLE, Yannick, F-78100 Saint-Germain-en-Laye (FR); HOVEMAN, Bertrand, F-95610 Eragny-sur-Oise (FR); DIEU-GOMONT, Séverine, F-78270 Limetz-Villez (FR); PROYE, Cyril, F-78200 Magnanville (FR); FOURGEOT, Sébastien, F-78840 Moisson (FR)
(74) Mandataire: GIE Innovation Competence Group
(86) Numéro de dépôt international: PCT/EP2013/057583
(87) Numéro de publication internationale: WO 2013/156386

(56) Documents cités:
- EP-A1- 1 249 787
- DE-A1-102010 036 057
- FR-A1- 2 859 870
- US-B1- 6 259 035

## Description

L'invention concerne le marquage d'indications sur un connecteur de carte à puce ou plus généralement sur un aménagement de face de module électronique de carte à puce destiné à venir affleurer de manière découverte en surface de la carte.

L'invention trouve une application particulièrement avantageuse dans le marquage des cartes bancaires, cartes SIM - Subscriber Identification Module en anglais - ou encore cartes d'identité, passeports, cartes de santé, badges d'accès notamment pour y inscrire un message de sécurité , une identification du fabricant ou de l'utilisateur ou de son entité (entreprise, association, etc.).

Une carte à puce comporte un module qui se présente typiquement sous la forme d'une couche diélectrique portant sur une face un composant électronique, i.e. la puce, et, sur une autre face, un connecteur électrique constitué par des contacts métalliques le plus souvent en cuivre recouverts d'une couche ou plusieurs couches de nickel pur ou allié ou les deux puis recouverts de couches d'or ou de palladium. Le module est logé dans une cavité aménagée dans l'épaisseur de la carte de manière à laisser accessibles de l'extérieur les contacts métalliques.

Il existe un besoin de personnaliser l'aspect d'un tel connecteur de carte à puce. Ce besoin est esthétique et sécuritaire.

Esthétiquement, le connecteur constitue en lui-même une surface assez étendue et largement exposée à l'oeil de l'utilisateur, qui est avantageusement mise à profit pour exposer une marque esthétique ou une distinction ornementale.

En termes sécuritaires, les cartes à puce sont particulièrement exposées à un risque de falsification, consistant à extraire un module existant de la carte et à le remplacer par un module pirate apte à produire une réponse malveillante à un lecteur associé. Un autre type de falsification peut consister au contraire à placer une puce authentique au sein d'une carte dont les inscriptions sont falsifiées afin de rendre cette carte capable de répondre adéquatement à un lecteur électronique de contrôle.

On a proposé plusieurs techniques pour marquer un tel module, et plus précisément le connecteur d'un tel module.

Ainsi, on a proposé dans le document DE 195 23 242 de graver une inscription dans le connecteur afin de laisser apparaitre la couche diélectrique au fond de l'inscription. Un tel marquage présente une qualité esthétique limitée et se prête mal au marquage d'indications élaborées.

On a également proposé, dans le document FR 2 695 234, de graver des indications dans l'épaisseur des contacts électriques à l'aide d'un faisceau laser. Ce document mentionne également la possibilité de marquer le connecteur par dépôt d'une couche d'encre sur les éléments métalliques du connecteur. Un tel procédé de marquage s'insère mal dans un cycle de fabrication habituel du connecteur ou du module, et s'avère couteux à mettre en oeuvre.

Enfin, on a proposé dans le document US 6 259 035 de réaliser des dépôts de métaux différents sur des zones distinctes du connecteur. Ce procédé reste toutefois limité en termes esthétiques et en termes d'accroché entre les différentes couches déposées.

Ainsi, un but de l'invention est de proposer un procédé de marquage d'indications sur un aménagement de face de module électronique de carte à puce, qui, tout en n'introduisant aucune perturbation dans l'aptitude au contact électrique lui-même, permette un résultat esthétique de qualité, soit facilement mis en oeuvre dans un processus industriel de fabrication des connecteurs ou plus généralement de l'aménagement de face, et présente une fiabilité particulière en termes de solidité.

Ce but est atteint selon l'invention grâce à un procédé de marquage d'un aménagement de face de module électronique de carte à puce, l'aménagement de face comportant une couche métallique, le procédé comprenant l'étape consistant à déposer une couche de revêtement sur une zone partielle de la couche métallique, le procédé comprenant une étape préalable audit dépôt de la couche de revêtement sur une zone partielle de la couche métallique laquelle étape préalable consiste en la mise en place d'un masque sur une zone distincte de ladite zone partielle de sorte que le masque empêche le dépôt de la couche de revêtement sur ladite zone distincte, caractérisé en ce que la couche de revêtement déposée sur la zone partielle de la couche métallique est composée d'un matériau choisi dans le groupe constitué du palladium et d'un alliage comprenant au moins 50% en poids de palladium.

Avantageusement, l'aménagement de face de module électronique de carte à puce est un connecteur de module électronique de carte à puce.

Avantageusement, le connecteur présente des plages formant des contacts électriques, la zone partielle sur laquelle le dépôt de la couche de revêtement est réalisé s'étendant sur au moins une partie d'au moins une de ces plages.

Avantageusement, la couche de revêtement est une couche de palladium pur.

Avantageusement, la couche de revêtement est déposée par électrodéposition.

Avantageusement, l'étape préliminaire de mise en place du masque comprend les étapes consistant à déposer un matériau photosensible, insoler ce matériau dans des zones sélectionnées, puis éliminer ce matériau en dehors des zones insolées.

Avantageusement, l'étape préliminaire de mise en place du masque comprend le fait de déposer un film sec photosensible sur la couche métallique.

Avantageusement, la couche métallique est une couche composée d'un matériau choisi dans le groupe constitué de l'or, du nickel, de l'argent, d'un alliage comportant au moins 50% en poids d'or, d'un alliage comportant au moins 1% en poids de nickel, d'un alliage comportant au moins 10% en poids d'argent.

Avantageusement, la couche métallique est une couche composée d'un matériau choisi dans le groupe constitué de l'or et d'un alliage comportant au moins 50% en poids d'or.

Avantageusement, la couche métallique est déposée sur une ou plusieurs couches métalliques intermédiaires superposées recouvrant une couche de cuivre.

Avantageusement, l'aménagement de face comportant une couche métallique de base, le procédé de marquage comprend l'étape consistant à graver la couche métallique de base dans une zone révélant un motif de marquage, la gravure étant réalisée sur une épaisseur partielle de la couche métallique de base et le procédé comportant une étape ultérieure à l'étape de gravure sur une épaisseur partielle laquelle étape ultérieure consiste à mettre en place le masque à l'aplomb d'une zone distincte de ladite zone gravée révélant un motif de marquage, de sorte que le masque empêche le dépôt de la couche de revêtement (90) composée d'un matériau choisi dans le groupe constitué du palladium et d'un alliage comprenant au moins 50% en poids de palladium à l'aplomb de ladite zone distincte (62), et l'étape consistant à déposer la couche de revêtement composée d'un matériau choisi dans le groupe constitué du palladium et d'un alliage comprenant au moins 50% en poids de palladium à l'aplomb de ladite zone gravée révélant un motif de marquage.

Avantageusement, l'aménagement de face comportant une couche métallique de base, le procédé de marquage comprend l'étape consistant à graver la couche métallique de base dans une zone révélant un motif de marquage, la gravure étant réalisée sur une épaisseur partielle de la couche métallique de base et le procédé comportant une étape ultérieure à l'étape de gravure sur une épaisseur partielle laquelle étape ultérieure consiste à mettre en place le masque à l'aplomb de ladite zone gravée révélant un motif de marquage, de sorte que le masque empêche le dépôt de la couche de revêtement composée d'un matériau choisi dans le groupe constitué du palladium et d'un alliage comprenant au moins 50% en poids de palladium à l'aplomb de ladite zone gravée, et l'étape consistant à déposer la couche de revêtement composée d'un matériau choisi dans le groupe constitué du palladium et d'un alliage comprenant au moins 50% en poids de palladium à l'aplomb d'une zone distincte de ladite zone gravée révélant un motif de marquage.

Avantageusement, le procédé comprend l'étape préliminaire au dépôt de la couche de revêtement composée d'un matériau choisi dans le groupe constitué du palladium et d'un alliage comprenant au moins 50% en poids de palladium laquelle étape préliminaire consiste à recouvrir la couche métallique de base d'une couche métallique de revêtement laquelle couche métallique de revêtement recouvre ladite zone gravée révélant un motif de marquage.

Avantageusement, l'aménagement de face est un connecteur de module électronique de carte à puce.

Avantageusement, le procédé comprend une étape de gravure chimique de microsillons séparant des plages composant des contacts électriques du connecteur et une étape préalable à cette étape de gravure chimique de microsillons consistant à mettre en place un masque protégeant de la gravure des zones distinctes des microsillons.

Avantageusement, la gravure d'une zone révélant un motif de marquage est une gravure chimique et le procédé comprend une étape préalable à l'étape de gravure de la zone révélant un motif de marquage laquelle étape préalable consiste à mettre en place un masque sur des zones distinctes de la zone révélant un motif de marquage, le masque protégeant de la gravure les zones distinctes de la zone révélant un motif de marquage.

Avantageusement, l'étape de gravure chimique des microsillons et l'étape de gravure chimique de la zone révélant un motif de marquage sont des étapes distinctes de sorte que le masque mis en place préalablement à l'une des gravures est retiré avant que le masque préalable à l'autre des gravures soit mis en place.

D'autres caractéristiques, buts et avantages de l'invention apparaitront à la lecture de la description détaillée qui va suivre, faite en référence aux figures annexées sur lesquelles :
- Les figures 1 à 3 représentent des étapes d'assemblage d'une couche diélectrique et d'une couche de cuivre selon un mode de réalisation de l'invention ;
- La figure 4 représente une étape de masquage de la couche de cuivre selon ce même mode de réalisation de l'invention ;
- Les figures 5 et 6 représentent des étapes de gravure de la couche de cuivre selon ce même mode de réalisation de l'invention ;
- La figure 7 représente une étape de dépôt de couche de revêtement selon ce même mode de réalisation de l'invention.
- La figure 8 représente une étape de mise en place d'un film photosensible et une étape d'insolation de ce film selon ce même mode de réalisation de l'invention
- La figure 9 représente un ensemble obtenu après développement et élimination de parties non insolées du film photosensible ;
- La figure 10 représente une étape de dépôt électrolytique selon ce même mode de réalisation de l'invention ;
- La figure 11 représente un ensemble obtenu après élimination du film photosensible selon ce même mode de réalisation de l'invention.
- La figure 12 représente une étape de mise en place d'un film photosensible selon un autre mode de réalisation de l'invention.
- La figure 13 représente une étape d'insolation de ce film photosensible ;
- La figure 14 représente un ensemble obtenu après développement et élimination de parties non insolées du film photosensible ;
- La figure 15 représente un ensemble obtenu après une étape de gravure partielle selon ce mode de réalisation de l'invention ;
- La figure 16 représente une étape de dépôt de couche de revêtement selon ce mode de réalisation de l'invention.

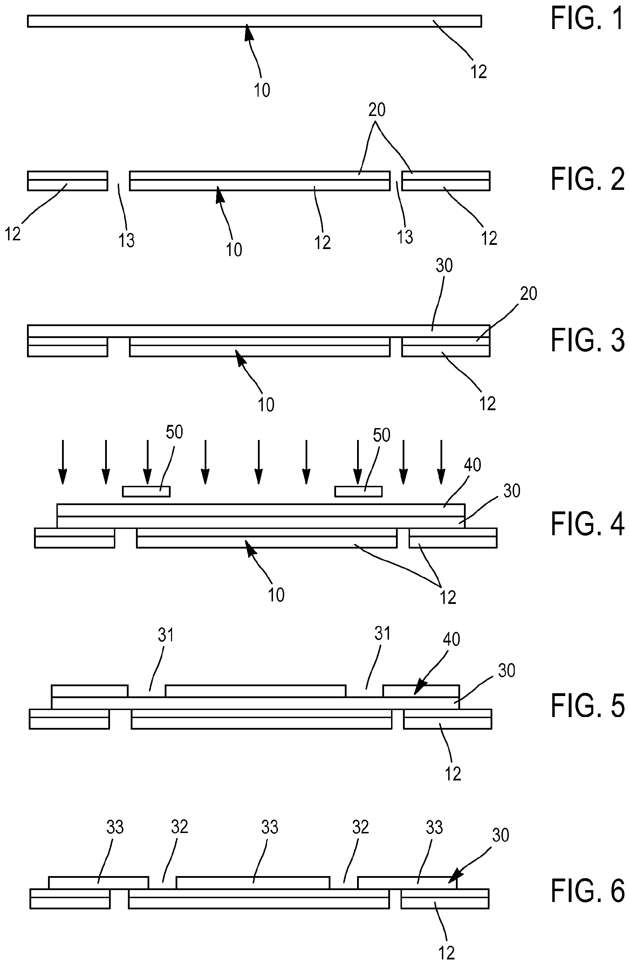

Les figures 1 à 6 représentent les étapes classiques d'un processus de production d'un connecteur de carte à puce. Selon une première étape, un support diélectrique 10 est fourni sous forme d'un film enroulée en bobine. Ce film diélectrique est ici un film de verre époxy mais peut en variante être constitué d'un autre matériau de nature diélectrique.

Une portion de film 12 est déroulée sans être séparée de la bobine. Tel que représenté à la figure 2, cette portion 12 du support diélectrique 10 subit un premier traitement qui consiste en l'application d'une couche de colle 20 puis en la réalisation de perforations 13 destinées au passage de liaisons électriques typiquement filaires.

A l'étape représentée à la figure 3, une couche de conduction 30 est apposée sur la couche de colle conductrice 20 laquelle couche de conduction 30 est ici une couche de cuivre. La couche de conduction est elle-même déroulée d'une bobine d'approvisionnement sans être à ce stade séparée de cette bobine.

L'ensemble formé de la couche diélectrique 10 et de la couche de cuivre 30 associées par la couche de colle 20 est ensuite laminé à chaud de manière à solidariser solidement ces deux couches.

L'ensemble obtenu après laminage est un feuilleté souple flexible qui peut être facilement enroulé en bobine, comme ce sera le cas après les étapes de préparation ultérieures décrites maintenant.

La figure 4 représente une étape suivante où un film photosensible 40 est apposé sur la couche de cuivre 30. Ce film photosensible 40 est également déroulée d'une bobine d'approvisionnement, non représentée, et apposé sur la couche de cuivre 30 sans être à ce stade séparé de cette bobine.

Ainsi, l'approvisionnement des couches diélectrique 10, de conduction 30 et de film photosensible 40 se font en déroulant des bobines d'approvisionnement respectives de sorte que l'assemblage de ces différentes couches se fait en continu.

L'étape suivante, également illustrée à la figure 4, consiste à insoler la couche photosensible 40 dans des zones choisies correspondant aux zones où l'on souhaite que la couche photosensible 40 reste en place. Cette insolation sélective est réalisée en utilisant un cache 50 correspondant aux zones ne devant pas être insolées.

L'ensemble obtenu est ensuite photo-développé chimiquement puis plongé dans un bain de réactif lequel élimine la couche photosensible 40 dans ses zones n'ayant pas été préalablement insolées, les zones ayant été insolées résistant, elles, à ce bain de réactif.

L'ensemble obtenu est représenté à la figure 5, où la couche de cuivre 30 est à nu dans des zones choisies 31 tandis qu'elle est masquée par le film photosensible dans ses autres parties.

L'ensemble constitué de la couche diélectrique 12, de la couche de cuivre 30, du film photosensible ajouré 40 est alors soumis à une étape de gravure chimique ciblée sur la couche de cuivre 30. Cette gravure consiste à plonger l'ensemble dans un bain de réactif lequel entame la couche de cuivre 30 dans ses parties découvertes.

Le cuivre exposé au réactif est alors éliminé de la couche 30.

La couche photosensible ajourée est ensuite éliminée par application d'un réactif adapté, et l'on obtient l'ensemble représenté à la figure 6 consistant en une couche de cuivre laquelle est ajourée de manière sélective, ici selon un réseau de microsillons 32 formant séparations entre les contacts 33 formés par les parties restantes de la couche de cuivre 30.

L'ensemble ainsi obtenu est ensuite soumis à un traitement de finition lequel consiste en le dépôt d'une couche de protection métallique de protection 60 de manière connue en soi. La couche de protection métallique 60 est dans cette variante une couche d'or, laquelle protège la couche de cuivre 30 de la corrosion et des agressions mécaniques telle que des griffures.

En variante, le traitement de finition consiste en le dépôt de plusieurs couches métalliques successives, comprenant par exemple une ou plusieurs couches de nickel allié ou non.

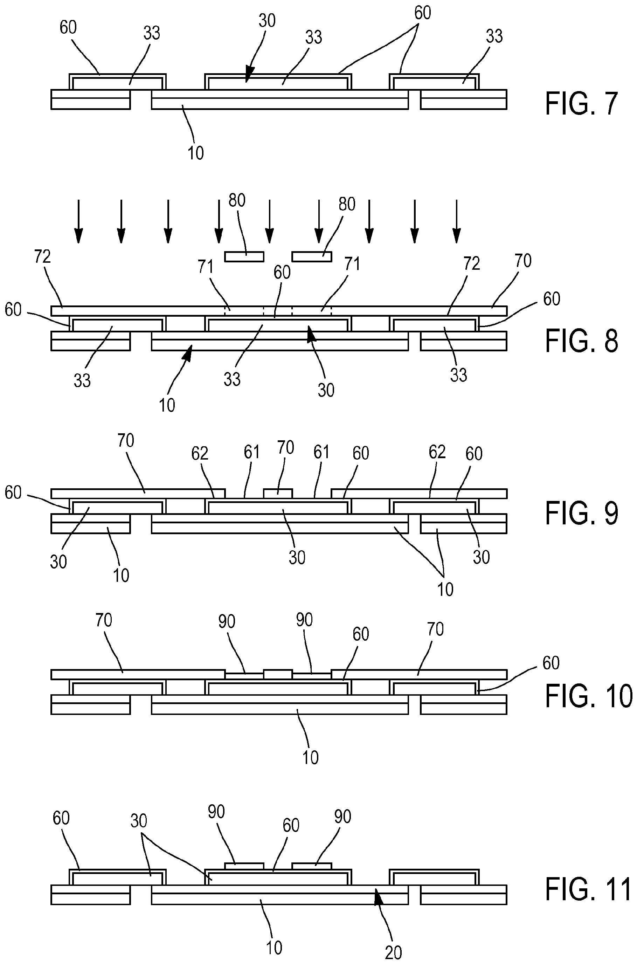

L'ensemble obtenu ici après dépôt de la couche de protection métallique 60 est représenté à la figure 7.

On souhaite à présent réaliser le marquage d'un motif sur l'ensemble ainsi obtenu.

Un film photosensible semblable au film 40, maintenant référencé 70 sur la figure 8, est apposé sur la couche de protection métallique 60. Le film 70 est approvisionné depuis une bobine non représentée, et apposé sur l'ensemble composé de la couche diélectrique 10, de la couche de cuivre 30 et de la couche de protection métallique 60 lequel ensemble est lui-même à ce stade lié notamment à la bobine d'approvisionnement de la couche diélectrique 10, laquelle couche diélectrique forme donc également une couche de transport.

Le film photosensible 70 est ensuite insolé dans une zone correspondant ici à la partie complémentaire du motif de marquage souhaité. Tel que représenté sur la figure 8, l'insolation est réalisée de manière sélective par utilisation d'un cache 80 de forme correspondante.

La partie du film photosensible 70 qui correspond au motif de marquage est référencée 71 sur la figure 8, tandis que la partie du film photosensible 70 qui correspondant à la partie complémentaire du motif de marquage est référencée 72. Des lignes fictives de séparation entre ces parties sont représentées en pointillé sur la figure 8 pour la clarté de l'exposé.

Après développement du film photosensible 70 et élimination des zones non exposées à la lumière de ce film, on obtient l'ensemble représenté à la figure 9 dans lequel une zone centrale du connecteur se trouve exposée dans des parties 61 correspondant aux parties éliminées du film photosensible 70, le film photosensible formant à ce stade un masque recouvrant une partie 62 seulement de la couche de protection métallique 60.

Le film photosensible 70 est ici un film sec, mais en variante une couche de matériau photosensible peut être déposée sous forme liquide, notamment sous forme d'une laque projetée sur la couche de cuivre, laquelle laque présente comme le film 70 une aptitude à être insolée puis développée pour être ensuite conservée partiellement selon les parties insolées.

Les zones 61 de la couche de protection métallique 60 qui sont laissées à nu à travers le film photosensible 70 sont maintenant soumises à un traitement apte à générer un marquage dont le motif correspond ici à ces zones 61 laissées à nu.

Pour cela, l'ensemble représenté à la figure 9, constitué de la couche diélectrique 10, de la couche de cuivre 30, de la couche de protection métallique 60 et du film photosensible 70 est soumis à une étape d'électrodéposition d'un alliage comprenant au moins 50% en poids de palladium. Préférentiellement et selon le présent mode de réalisation, cette étape d'électrodéposition est une étape de dépôt de palladium pur.

Le palladium vient recouvrir les zones 61 laissées à nu par le film photosensible ajouré 70, lequel joue le rôle de masque pendant l'étape d'électrodéposition. Le palladium ou l'alliage de palladium forme ainsi une couche de revêtement 90 en légère surépaisseur sur la couche d'or 60, tel que représentée à la figure 10.

La couche de revêtement 90 de palladium recouvre partiellement la couche de protection d'or 60, laquelle couche de protection peut selon une variante être une couche d'alliage comprenant au moins 50% d'or en poids.

L'étape suivante consiste à éliminer le film photosensible 70 selon une méthode connue en soi.

Le dépôt de palladium 90 est ici effectué sur une zone constituant le motif à marquer, de sorte que le motif apparait à la couleur du palladium sur un fond de couleur or. Le palladium présente l'aptitude nécessaire de résistance à la corrosion et de résistance aux agressions mécaniques nécessaires à sa présence en partie externe du connecteur.

La couleur du palladium étant distincte de celle de l'or, la couche de palladium 90 forme après élimination du film photosensible un motif coloré sur un fond couleur or. Un tel marquage présente une visibilité suffisante pour être remarqué à l'oeil nu, ainsi qu'une esthétique agréable.

La couche de palladium 90 ne forme qu'une très faible « surépaisseur » sur la couche d'or 60, qui ne restreint pas la capacité du connecteur à être utilisé dans un lecteur de carte classique. Cette très faible surépaisseur permet en outre de réaliser le motif de marquage non seulement sur une zone centrale du connecteur habituellement non utilisée en tant que contact électrique, mais également sur des plages du connecteur formant les contacts électriques proprement dits. Un tel marquage du motif à la fois sur la zone centrale du connecteur et sur les plages du connecteur formant contacts électriques est préférentiellement réalisé dans une même étape de dépôt électrolytique avec un même masque tel que le film 70 décrit ci-dessus.

Bien que l'on ait décrit ici le dépôt d'une seule couche de palladium, on dépose avantageusement plusieurs telles couches successives dans les zones 61 laissées à nu par le film photosensible ajouré 70 de manière à obtenir une épaisseur de palladium suffisante à la fois en termes d'aspect esthétique et en termes de tenue vis-à-vis des agressions mécaniques auxquelles la carte sera exposée. Les couches successives de palladium sont avantageusement déposées par électrodéposition en répétant l'opération de dépôt telle que décrite ci-dessus pour le dépôt de la couche 90 dans des bacs successifs.

Bien que l'on ait décrit le marquage comme étant réalisé sur un connecteur de carte à puce, ce marquage peut plus généralement être réalisé sur un aménagement de face de module de carte. Un tel aménagement de face est agencé pour être affleurant en surface de la carte, c'est-à-dire destiné à être découvert en surface de la carte. Un tel aménagement de face peut comporter des contacts électriques et peut dans une variante de l'invention ne comporter aucun contact électrique comme c'est le cas pour un aménagement de face destiné à un module associé à une antenne et qui, bien qu'affleurant, est utilisé pour un pur fonctionnement sans contact. Le marquage dans ce cas n'avoisine ni ne recouvre donc aucun contact électrique du module.

Le marquage est ici réalisé par dépôt de palladium sur une couche d'or. Le palladium s'avère présenter des propriétés d'accroché particulièrement efficaces sur différents métaux habituellement utilisés pour le revêtement de modules, tels que le nickel, l'argent ou l'or.La couche métallique sur laquelle est déposé le palladium est avantageusement une couche composée d'or pur, de nickel pur, d'argent pur, ou encore d'un alliage comportant au moins 50% en poids d'or, d'un alliage comportant au moins 1% en poids de nickel, ou d'un alliage comportant au moins 10% en poids d'argent.

Le palladium s'avère en outre présenter une capacité d'accroché particulièrement élevée sur une couche d'or ou d'alliage comprenant au moins 50% en poids d'or.

Ces avantages sont obtenus pour une couche de revêtement 90 constituée d'un alliage comportant au moins 50% en poids de palladium. Néanmoins un couche de revêtement en palladium pur est préférée pour les raisons esthétiques et d'accroché précédemment mentionnées. Une couche de protection métallique en or pur est également préférée pour les mêmes raisons.

Bien que l'on ait décrit la réalisation du marquage sous la forme d'un motif en palladium, une variante consiste à déposer le palladium dans une zone complémentaire au motif de marquage, lequel motif est alors constitué des zones où la couche sous-jacente est restée à nu, le motif apparaissant alors par contraste avec les autres parties où le palladium est déposé.

Par ailleurs, on a décrit ici un mode de réalisation dans lequel une couche de protection, ici une couche d'or ou d'alliage d'or, est déposée sur l'ensemble de la couche de cuivre, ou sur la couche de cuivre sur laquelle se trouvent éventuellement un ou plusieurs couches de nickel alliées ou non avant d'être partiellement recouverte de palladium. En variante, on procède au dépôt d'une couche de protection en un premier métal sur une zone partielle de la couche de cuivre, puis on dépose une ou plusieurs couches de palladium sur une zone complémentaire de la couche de cuivre, de sorte que les deux couches de métaux s'étendent l'une à côté de l'autre en se rejoignant bord-à-bord. Dans ce mode de réalisation, on procède avantageusement à deux masquages différents, le premier masquage couvrant la zone réservée au palladium mais découvrant la zone où doit être déposé l'autre métal, le second masquage couvrant la zone où cet autre métal est déposé et laissant découverte la zone à recouvrir de palladium. Ces deux masquages sont réalisés comme décrit précédemment par dépôt d'un film photosensible et insolation partielle puis développement de ce film.

Le motif réalisé est avantageusement un logo, mais peut également être une inscription d'information ou une décoration de quelconque nature. Le motif peut également être un motif d'authentification permettant de reconnaitre le module par son aspect extérieur pour permettre à l'utilisateur de s'assurer de l'authenticité du module présent sur la carte, ce motif ayant également pour fonction de rendre le module difficilement reproductible de manière non autorisée. Parmi les indications pouvant être marquées sur le module, on peut citer une marque ou le nom du fabricant de la carte, de la banque émettrice de la carte ou encore de l'opérateur de téléphonie mobile émetteur de la carte lorsqu'il s'agit d'une carte SIM.

Une fois le marquage réalisé, on obtient un connecteur ou plus généralement un aménagement de face de module de carte à puce prêt à être assemblé à une puce.

L'aménagement de face de module fait à ce stade partie d'une bande flexible liée à une bobine d'approvisionnement. Cette bande est enroulée à nouveau sous la forme d'une bobine destinée à être fournie à un atelier réalisant l'assemblage du connecteur ou plus généralement de l'aménagement de face avec la puce et réalisant la mise en place des modules ainsi assemblés dans des corps de carte.

On décrira maintenant un second mode de réalisation dans lequel on réalise un tel marquage par dépôt de palladium sur une structure ayant subi un traitement consistant en une microgravure telle qu'on va la décrire maintenant.

Pour réaliser une telle structure, les étapes décrites ci-dessus en référence aux figures 1 à 6 restent les mêmes et ne seront pas décrites à nouveau. On obtient donc l'ensemble représenté à la figure 6 consistant en une couche de cuivre laquelle est ajourée de manière sélective, ici selon un réseau de microsillons 32 formant séparations entre les contacts 33 formés par les parties restantes de la couche de cuivre 30.

On souhaite à présent réaliser un marquage de la couche de cuivre 30 dans ces portions restantes 33 afin de générer un marquage distinctif sur ces parties restantes.

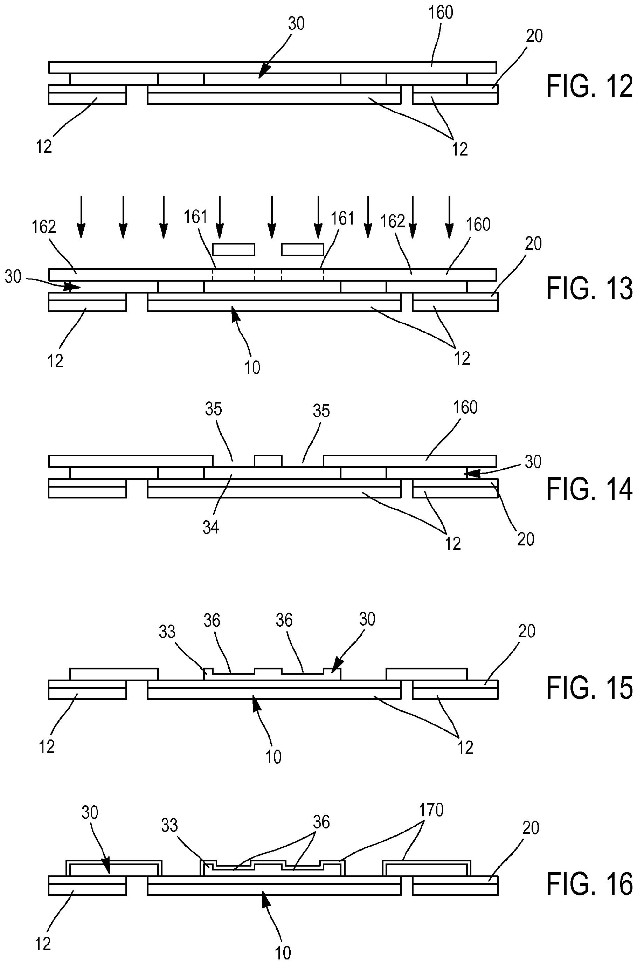

Un film photosensible semblable au film 40, maintenant référencé 160 sur la figure 12, est apposé sur la couche de cuivre 30.

Tel que représenté sur la figure 13, le film photosensible 160 est maintenant insolé dans une zone correspondant à la partie complémentaire du marquage souhaité. L'insolation est réalisée de manière sélective par utilisation d'un cache de forme correspondante.

La partie du film photosensible 160 qui correspond au marquage est référencée 161 sur la figure 13, tandis que la partie du film photosensible 160 qui correspondant à la partie complémentaire du marquage est référencée 162 sur la figure 13.

Après développement du film photosensible 160 et élimination des zones non exposées à la lumière de ce film 160, on obtient l'ensemble représenté à la figure 14. Une zone centrale 34 du connecteur se trouve exposée dans des parties 35 correspondant aux parties éliminées du film photosensible 160.

Le film photosensible 160 est ici un film sec, mais en variante une couche de matériau photosensible peut être déposée sous forme liquide sur la couche de cuivre 30, notamment sous forme d'une laque projetée sur la couche de cuivre, laquelle laque présente comme le film 160 une aptitude à être insolée puis développée pour être ensuite conservée partiellement selon les parties insolées.

Les zones exposées 35 de la couche de cuivre 30 sont maintenant soumises à un traitement apte à générer un marquage dont le motif correspond à ces zones exposées 35.

La réalisation du marquage consiste réaliser une étape de gravure chimique sur la couche de cuivre 30. De la même façon que pour l'étape de gravure décrite précédemment en référence à la figure 6, cette gravure consiste à plonger l'ensemble dans un bain de réactif.

On réalise une telle gravure sur une profondeur maitrisée de la couche de cuivre, ici une profondeur d'environ 5 à 15 micromètres.

Pour maitriser la profondeur de la gravure, une première méthode consiste à réaliser la gravure dans un bain de réactif classique en soi. La durée de présence de l'ensemble comprenant la couche de cuivre 30 dans ce bain de réactif est quant à elle paramétrée de telle sorte que l'action du réactif sur la couche de cuivre 30 disparaisse précisément lorsque la profondeur voulue est atteinte. Cette durée de présence dans le réactif, qui est variable selon la concentration du réactif, est facilement réglée pour obtenir la profondeur choisie. Pour une profondeur de 5 à 15 micromètres, une durée de présence dans un réactif de gravure chimique classique entre une dizaine de secondes et une minute permet d'obtenir une profondeur de gravure comprise idéalement entre 5 et 15 micromètres.

Une autre technique consiste à utiliser une durée de présence de la couche de cuivre dans un réactif de gravure chimique de nature classique en soi, à base de chlorure cuivrique, mais en concentration particulièrement faible, par exemple dans un bain à base de chlorure cuivrique ayant une concentration chimique en acide chlorhydrique inférieure à 100 grammes par litre, de sorte que les composants actifs du réactif de gravure ne permettent qu'une vitesse limitée de disparition des molécules de cuivre sur la durée de présence du cuivre dans le réactif. Cette vitesse de disparition du cuivre ne permet alors qu'une gravure de profondeur limitée pendant une durée de présence classique dans le réactif.

En réalisant une telle gravure sur une profondeur correspondant à une fraction seulement de l'épaisseur de la couche de cuivre, la zone gravée 36 conserve un fond matérialisé par la couche de cuivre 30 elle-même, ce qui permettra par la suite de déposer une couche de revêtement métallique à la fois sur la partie de la couche de cuivre formant le pourtour du marquage et à la fois sur la partie de la couche de cuivre formant le fond de la partie gravée, permettant de réaliser un marquage en creux.

L'étape suivante consiste à éliminer la feuille de matériau photosensible 160. L'ensemble obtenu, représenté sur la figure 15, comporte une ou plusieurs plages continues 33 de la couche de cuivre 30 lesquelles présentent une ou des parties en creux 36, lesquelles parties en creux 36 forment ici le motif voulu.

Par exemple, la plage gravée 33 peut être une plage centrale du connecteur laquelle n'est destinée à venir en contact électrique avec aucune piste associée.

Le motif en creux présente néanmoins une tenue mécanique qui permet de le réaliser au moins partiellement sur des contacts destinés à coopérer avec des pistes associées d'un lecteur de carte.

Selon une étape de finition, on procède à un dépôt électrolytique d'une couche de revêtement métallique 170 sur la couche métallique de base formée par la couche de cuivre 30. La couche de revêtement métallique 170 vient recouvrir toutes les parties de cuivre apparentes, et en particulier le fond des parties gravées 36. Un tel ensemble obtenu après dépôt de la couche de revêtement métallique 170 est représenté à la figure 16. En variante, le dépôt de la couche de revêtement 170 peut être précédé du dépôt d'une sous-couche de nickel.

Le métal utilisé pour la couche de revêtement métallique 170 est par exemple l'or, l'argent, le palladium, le nickel. La couche de revêtement métallique peut en variante être constituée d'un alliage composé d'au moins 50% en poids d'or, d'un alliage composé d'au moins 50% en poids de palladium, d'un alliage composé d'au moins 1% en poids de nickel, d'un alliage composé d'au moins 10% en poids d'argent. Le cuivre est ainsi protégé de la corrosion et des agressions mécaniques telles que griffures ou micro-poinçonnages.

On a décrit ici le marquage d'un motif par gravure de ce motif même. Néanmoins, en variante on réalise une gravure d'une zone complémentaire du motif à créer, de sorte que le motif apparait en surépaisseur par rapport à cette zone complémentaire gravée.

On réalise sur l'ensemble représenté à la figure 16 une nouvelle étape de marquage laquelle consiste en un dépôt d'une couche de palladium.

Pour cela, on reprend les étapes décrites en référence aux figures 7 à 11, en positionnant les zones éliminées 61 du film photosensible à l'aplomb des zones gravées 36 de la plage 33.

Ainsi, une couche de palladium est déposée de manière sélective au fond des parties gravées 36 et, après élimination du film photosensible, ces zones en creux présentent une coloration différente de la couche de revêtement métallique 170.

Le fait de réaliser des zones de coloration différentes qui soient des zones en creux confère à ces zones un aspect particulièrement esthétique, qui met en valeur à la fois la différence de relief constituée par ce creux et qui met en valeur la différence de coloration entre le palladium et le revêtement métallique 170.

Bien que l'on ait décrit ici un dépôt sélectif de palladium sur des parties en creux c'est-à-dire à l'aplomb des zones en creux 36, dans une variante on masque ces parties en creux et on réalise un dépôt sélectif de palladium à l'aplomb des parties complémentaires au zones gravées 36. Dans cette variante également, un marquage constitué par les parties en creux ou par les parties complémentaires en relief est mis en valeur par le dépôt sélectif de palladium sur ces parties complémentaires.

Bien entendu, et bien que l'on préfère ici un dépôt de palladium pur, en une ou plusieurs couches, on dépose en variante une ou plusieurs couches d'alliage de palladium comprenant au moins 50 % de palladium en poids.

## Revendications

1. Procédé de marquage d'un aménagement de face (10,20,30,60,90) de module électronique de carte à puce, l'aménagement de face (10,20,30,60,90) comportant une couche métallique (60), le procédé comprenant l'étape consistant à déposer une couche de revêtement (90) sur une zone partielle (61) de la couche métallique (60), le procédé comprenant une étape préalable audit dépôt de la couche de revêtement (90) sur une zone partielle de la couche métallique (60), laquelle étape préalable consiste en la mise en place d'un masque (70) sur une zone distincte (62) de ladite zone partielle (61) de sorte que le masque (70) empêche le dépôt de la couche de revêtement (90) sur ladite zone distincte (62), **caractérisé en ce que** la couche de revêtement (90) déposée sur la zone partielle (61) de la couche métallique (60) est composée d'un matériau choisi dans le groupe constitué du palladium et d'un alliage comprenant au moins 50% en poids de palladium.

2. Procédé selon la revendication 1, **caractérisé en ce que** l'aménagement de face (10,20,30,60,90) de module électronique de carte à puce est un connecteur (10,20,30,60,90) de module électronique de carte à puce.

3. Procédé selon la revendication 2, **caractérisé en ce que** le connecteur (10,20,30,60,90) présente des plages formant des contacts électriques, la zone partielle (61) sur laquelle le dépôt de la couche de revêtement (90) est réalisé s'étendant sur au moins une partie d'au moins une de ces plages.

4. Procédé selon l'une quelconque des revendications précédentes, **caractérisé en ce que** la couche de revêtement (90) est une couche de palladium pur.

5. Procédé selon l'une quelconque des revendications précédentes, **caractérisé en ce que** la couche de revêtement (90) est déposée par électrodéposition.

6. Procédé selon l'une quelconque des revendications précédentes, **caractérisé en ce que** l'étape préliminaire de mise en place du masque (70) comprend les étapes consistant à déposer un matériau photosensible (70), insoler ce matériau (70) dans des zones sélectionnées (72), puis éliminer ce matériau (70) en dehors des zones insolées (72).

7. Procédé selon la revendication précédente, **caractérisé en ce que** l'étape préliminaire de mise en place du masque (70) comprend le fait de déposer un film sec photosensible (70) sur la couche métallique (60).

8. Procédé selon l'une quelconque des revendications précédentes, **caractérisé en ce que** la couche métallique (60) est une couche composée d'un matériau choisi dans le groupe constitué de l'or, du nickel, de l'argent, d'un alliage comportant au moins 50% en poids d'or, d'un alliage comportant au moins 1% en poids de nickel, d'un alliage comportant au moins 10% en poids d'argent.

9. Procédé selon l'une quelconque des revendications précédentes, **caractérisé en ce que** la couche métallique (60) est une couche composée d'un matériau choisi dans le groupe constitué de l'or et d'un alliage comportant au moins 50% en poids d'or.

10. Procédé selon l'une quelconque des revendications précédentes, **caractérisé en ce que** la couche métallique (60) est déposée sur une ou plusieurs couches métalliques intermédiaires superposées recouvrant une couche de cuivre.

11. Procédé selon l'une quelconque des revendications précédentes, l'aménagement de face comportant une couche métallique de base (30), le procédé de marquage comprenant l'étape consistant à graver la couche métallique de base (30) dans une zone (36) révélant un motif de marquage, la gravure étant réalisée sur une épaisseur partielle de la couche métallique de base (30) et le procédé comportant une étape ultérieure à l'étape de gravure sur une épaisseur partielle laquelle étape ultérieure consiste à mettre en place le masque à l'aplomb d'une zone distincte (162) de ladite zone gravée révélant un motif de marquage, de sorte que le masque (70) empêche le dépôt de la couche de revêtement (90) composée d'un matériau choisi dans le groupe constitué du palladium et d'un alliage comprenant au moins 50% en poids de palladium à l'aplomb de ladite zone distincte (62), et l'étape consistant à déposer la couche de revêtement (90) composée d'un matériau choisi dans le groupe constitué du palladium et d'un alliage comprenant au moins 50% en poids de palladium à l'aplomb de ladite zone gravée révélant un motif de marquage.

12. Procédé selon l'une quelconque des revendications 1 à 10, l'aménagement de face comportant une couche métallique de base (30), le procédé de marquage comprenant l'étape consistant à graver la couche métallique de base (30) dans une zone (36) révélant un motif de marquage, la gravure étant réalisée sur une épaisseur partielle de la couche métallique de base (30) et le procédé comportant une étape ultérieure à l'étape de gravure sur une épaisseur partielle laquelle étape ultérieure consiste à mettre en place le masque à l'aplomb de ladite zone gravée révélant un motif de marquage, de sorte que le masque (70) empêche le dépôt de la couche de revêtement (90) composée d'un matériau choisi dans le groupe constitué du palladium et d'un alliage comprenant au moins 50% en poids de palladium à l'aplomb de ladite zone gravée, et l'étape consistant à déposer la couche de revêtement (90) composée d'un matériau choisi dans le groupe constitué du palladium et d'un alliage comprenant au moins 50% en poids de palladium à l'aplomb d'une zone distincte de ladite zone gravée révélant un motif de marquage.

13. Procédé selon la revendication 11 ou la revendication 12, **caractérisé en ce qu'**il comprend l'étape préliminaire au dépôt de la couche de revêtement (90) composée d'un matériau choisi dans le groupe constitué du palladium et d'un alliage comprenant au moins 50% en poids de palladium laquelle étape préliminaire consiste à recouvrir la couche métallique de base (30) d'une couche métallique intermédiaire (170) laquelle couche métallique intermédiaire recouvre ladite zone gravée (36) révélant un motif de marquage.

14. Procédé selon l'une quelconque des revendications 11 à 13, **caractérisé en ce que** l'aménagement de face (10,20,30,60,90,170) est un connecteur (10,20,30,70) de module électronique de carte à puce.

15. Procédé selon la revendication précédente, **caractérisé en ce qu'**il comprend une étape de gravure chimique de microsillons (32) séparant des plages composant des contacts électriques du connecteur (10,20,30,60,90,170) et une étape préalable à cette étape de gravure chimique de microsillons (32) consistant à mettre en place un masque (40) protégeant de la gravure des zones distinctes (33) des microsillons (32).

16. Procédé selon l'une quelconque des revendications 11 à 15, **caractérisé en ce que** la gravure d'une zone (36) révélant un motif de marquage est une gravure chimique et le procédé comprend une étape préalable à l'étape de gravure de la zone (36) révélant un motif de marquage laquelle étape préalable consiste à mettre en place un masque (160) sur des zones distinctes de la zone (36) révélant un motif de marquage, le masque protégeant de la gravure les zones distinctes de la zone (36) révélant un motif de marquage.

17. Procédé selon la revendication 15 en combinaison avec la revendication 16, **caractérisé en ce que** l'étape de gravure chimique des microsillons (32) et l'étape de gravure chimique de la zone (36) révélant un motif de marquage sont des étapes distinctes de sorte que le masque (40,160) mis en place préalablement à l'une des gravures est retiré avant que le masque (40,160) préalable à l'autre des gravures soit mis en place.

## Patentansprüche

1. Verfahren zum Markieren einer Frontanordnung (10, 20, 30, 60, 90) eines elektronischen Chipkartenmoduls, wobei die Frontanordnung (10, 20, 30, 60, 90) eine Metallschicht (60) aufweist, wobei das Verfahren den Schritt aufweist, der darin besteht, eine Überzugsschicht (90) auf einen Teilbereich (61) der Metallschicht (60) aufzubringen, wobei das Verfahren einen vorhergehenden Schritt vor dem Aufbringen der Überzugsschicht (90) auf einen Teilbereich der Metallschicht (60) aufweist, wobei der vorhergehende Schritt in dem Anbringen einer Maske (70) auf einem separaten Bereich (62) des Teilbereichs (61) besteht, derart, dass die Maske (70) das Aufbringen der Überzugsschicht (90) auf dem separaten Bereich (62) verhindert, **dadurch gekennzeichnet, dass** die Überzugsschicht (90), die auf dem Teilbereich (61) der Metallschicht (60) aufgebracht wird, aus einem Material besteht, das aus der Gruppe ausgewählt wird, bestehend aus Palladium und einer Legierung, umfassend mindestens 50 Gew.% Palladium.

2. Verfahren nach Anspruch 1, **dadurch gekennzeichnet, dass** die Frontanordnung (10, 20, 30, 60, 90) eines elektronischen Chipkartenmoduls ein Stecker (10, 20, 30, 60, 90) eines elektronischen Chipkartenmoduls ist.

3. Verfahren nach Anspruch 2, **dadurch gekennzeichnet, dass** der Stecker (10, 20, 30, 60, 90) Bereiche aufweist, die elektrische Kontakte bilden, wobei sich der Teilbereich (61), auf dem das Aufbringen der Überzugsschicht (90) durchgeführt wird, mindestens auf einem Teil von mindestens einem dieser Bereiche erstreckt.

4. Verfahren nach einem der vorhergehenden Ansprüche, **dadurch gekennzeichnet, dass** die Überzugsschicht (90) eine Schicht aus reinem Palladium ist.

5. Verfahren nach einem der vorhergehenden Ansprüche, **dadurch gekennzeichnet, dass** die Überzugsschicht (90) durch Elektroabscheidung aufgebracht wird.

6. Verfahren nach einem der vorhergehenden Ansprüche, **dadurch gekennzeichnet, dass** der vorhergehende Schritt des Anbringens der Maske (70) die Schritte aufweist, die darin bestehen, ein lichtempfindliches Material (70) aufzubringen, dieses Material (70) in den ausgewählten Bereichen (72) zu isolieren und dann dieses Material (70) außerhalb der isolierten Bereiche (72) zu beseitigen.

7. Vorrichtung nach dem vorhergehenden Anspruch, **dadurch gekennzeichnet, dass** der vorhergehende Schritt des Anbringens der Maske (70) das Aufbringen eines trockenen lichtempfindlichen Films (70) auf der Metallschicht (60) aufweist.

8. Verfahren nach einem der vorhergehenden Ansprüche, **dadurch gekennzeichnet, dass** die Metallschicht (60) eine Schicht ist, die aus einem Material besteht, das aus der Gruppe ausgewählt wird, bestehend aus Gold, Nickel, Silber, einer Legierung, die mindestens 50 Gew.% Gold umfasst, einer Legierung, die mindestens 1 Gew.% Nickel umfasst, einer Legierung, die mindestens 10 Gew.% Silber umfasst.

9. Verfahren nach einem der vorhergehenden Ansprüche, **dadurch gekennzeichnet, dass** die Metallschicht (60) eine Schicht ist, die aus einem Material besteht, das aus der Gruppe ausgewählt wird, bestehend aus Gold und einer Legierung, die mindestens 50 Gew.% Gold umfasst.

10. Verfahren nach einem der vorhergehenden Ansprüche, **dadurch gekennzeichnet, dass** die Metallschicht (60) auf einer oder mehreren übereinanderliegenden Metallzwischenschichten, die eine Kupferschicht bedecken, aufgebracht wird.

11. Verfahren nach einem der vorhergehenden Ansprüche, wobei die Frontanordnung eine metallische Basisschicht (30) aufweist, wobei das Verfahren zum Markieren einen Schritt aufweist, der darin besteht, die metallische Basisschicht (30) in einem Bereich (36) zu ätzen, der ein Markierungsmotiv zeigt, wobei das Ätzen auf einer Teildicke der metallischen Basisschicht (30) durchgeführt wird, und wobei das Verfahren einen nachfolgenden Schritt nach dem Schritt des Ätzens auf einer Teildicke aufweist, wobei der nachfolgende Schritt darin besteht, die Maske senkrecht zu einem separaten Bereich (162) des geätzten Bereichs, der ein Markierungsmotiv zeigt, derart anzubringen, dass die Maske (70) das Aufbringen der Überzugsschicht (90), die aus einem Material besteht, das aus der Gruppe ausgewählt wird, bestehend aus Palladium und einer Legierung, umfassend mindestens 50 Gew.% Palladium, senkrecht zu dem separaten Bereich (62) verhindert, und den Schritt aufweist, der darin besteht, die Überzugsschicht (90), die aus einem Material besteht, das aus der Gruppe ausgewählt wird, bestehend aus Palladium und einer Legierung, umfassend mindestens 50 Gew.% Palladium, senkrecht zu dem geätzten Bereich aufzubringen, der ein Markierungsmotiv zeigt.

12. Verfahren nach einem der Ansprüche 1 bis 10, wobei die Frontanordnung eine metallische Basisschicht (30) aufweist, wobei das Verfahren zum Markieren einen Schritt aufweist, der darin besteht, die metallische Basisschicht (30) in einem Bereich (36) zu ätzen, der ein Markierungsmotiv zeigt, wobei das Ätzen auf einer Teildicke der metallischen Basisschicht (30) durchgeführt wird, und wobei das Verfahren einen nachfolgenden Schritt nach dem Schritt des Ätzens auf einer Teildicke aufweist, wobei der nachfolgende Schritt darin besteht, die Maske senkrecht zu dem geätzten Bereich, der ein Markierungsmotiv zeigt, derart anzubringen, dass die Maske (70) das Aufbringen der Überzugsschicht (90), die aus einem Material besteht, das aus der Gruppe ausgewählt wird, bestehend aus Palladium und einer Legierung, umfassend mindestens 50 Gew.% Palladium, senkrecht zu dem geätzten Bereich verhindert, und den Schritt aufweist, der darin besteht, die Überzugsschicht (90), die aus einem Material besteht, das aus der Gruppe ausgewählt wird, bestehend aus Palladium und einer Legierung, umfassend mindestens 50 Gew.% Palladium, senkrecht zu einem separaten Bereich von dem geätzten Bereich aufzubringen, der ein Markierungsmotiv zeigt.

13. Verfahren nach Anspruch 11 oder 12, **dadurch gekennzeichnet, dass** es einen vorhergehenden Schritt vor dem Aufbringen der Überzugsschicht (90) aufweist, die aus einem Material besteht, das aus der Gruppe ausgewählt wird, bestehend aus Palladium und einer Legierung, umfassend mindestens 50 Gew.% Palladium, wobei der vorhergehende Schritt darin besteht, die metallische Basisschicht (30) mit einer Metallzwischenschicht (170) zu bedecken, wobei die Metallzwischenschicht den geätzten Bereich (36) bedeckt, der ein Markierungsmotiv zeigt.

14. Verfahren nach einem der Ansprüche 11 bis 13, **dadurch gekennzeichnet, dass** die Frontanordnung (10, 20, 30, 60, 90, 170) ein Stecker (10, 20, 30, 70) eines elektronischen Chipkartenmoduls ist.

15. Verfahren nach dem vorhergehenden Anspruch, **dadurch gekennzeichnet, dass** es einen Schritt des chemische Ätzens von Mikrorillen (32), die Bereiche trennen, die elektrische Kontakte des Steckers (10, 20, 30, 60, 90, 170) bilden, und einen vorhergehenden Schritt vor diesem Schritt des chemische Ätzens von Mikrorillen (32) aufweist, der darin besteht, eine Maske (40) anzubringen, die Bereiche (33), die von den Mikrorillen (32) verschieden sind, vor dem Ätzen schützt.

16. Verfahren nach einem der Ansprüche 11 bis 15, **dadurch gekennzeichnet, dass** das Ätzen eines Bereichs (36), der ein Markierungsmotiv zeigt, ein chemisches Ätzen ist, und dass das Verfahren einen vorhergehenden Schritt vor dem Schritt des Ätzens des Bereichs (36) aufweist, der ein Markierungsmotiv zeigt, wobei der vorhergehende Schritt darin besteht, eine Maske (160) auf Bereichen anzubringen, die von dem Bereich (36) verschieden sind, der ein Markierungsmotiv zeigt, wobei die Maske die Bereiche, die von dem Bereich (36) verschieden sind, der ein Markierungsmotiv zeigt, vor dem Ätzen schützt.

17. Verfahren nach Anspruch 15 in Kombination mit Anspruch 16, **dadurch gekennzeichnet, dass** der Schritt des chemischen Ätzens der Mikrorillen (32) und der Schritt des chemischen Ätzens des Bereichs (36), der ein Markierungsmotiv zeigt, Schritte sind, die derart getrennt sind, dass die Maske (40, 160), die vor einem der Schritte des Ätzens angebracht wird, entfernt wird, bevor die Maske (40, 160) vor dem anderen der Schritte des Ätzens angebracht wird.

## Claims

1. Process for marking a chip card electronic module face arrangement (10, 20, 30, 60, 90), the face arrangement (10, 20, 30, 60, 90) including a metal layer (60), the process comprising the step consisting in depositing a coating layer (90) on a partial zone (61) of the metal layer (60), the process comprising a step prior to said deposition of the coating layer (90) on a partial zone of the metal layer (60), which prior step consists in putting a mask (70) in place over a distinct zone (62) of said partial zone (61) such that the mask (70) prevents the coating layer (90) from being deposited on said distinct zone (62), **characterized in that** the coating layer (90) deposited on the partial zone (61) of the metal layer (60) is composed of a material chosen from the group consisting of palladium and of an alloy comprising at least 50% palladium by weight.

2. Process according to Claim 1, **characterized in that** the chip card electronic module face arrangement (10, 20, 30, 60, 90) is a chip card electronic module connector (10, 20, 30, 60, 90).

3. Process according to Claim 2, **characterized in that** the connector (10, 20, 30, 60, 90) has lands forming electrical contacts, the partial zone (61) on which the coating layer (90) is deposited extending over at least part of at least one of these lands.

4. Process according to any one of the preceding claims, **characterized in that** the coating layer (90) is a layer of pure palladium.

5. Process according to any one of the preceding claims, **characterized in that** the coating layer (90) is deposited by electrodeposition.

6. Process according to any one of the preceding claims, **characterized in that** the preliminary step of putting the mask (70) in place comprises the steps consisting in depositing a photosensitive material (70), exposing this material (70) to light in selected zones (72), then removing this material (70) outside of the zones (72) exposed to light.

7. Process according to the preceding claim, **characterized in that** the preliminary step of putting the mask (70) in place comprises the act of depositing a photosensitive dry film (70) on the metal layer (60).

8. Process according to any one of the preceding claims, **characterized in that** the metal layer (60) is a layer composed of a material chosen from the group consisting of gold, nickel, silver, of an alloy including at least 50% gold by weight, of an alloy including at least 1% nickel by weight and of an alloy including at least 10% silver by weight.

9. Process according to any one of the preceding claims, **characterized in that** the metal layer (60) is a layer composed of a material chosen from the group consisting of gold and of an alloy including at least 50% gold by weight.

10. Process according to any one of the preceding claims, **characterized in that** the metal layer (60) is deposited on one or more superposed intermediate metal layers covering a copper layer.

11. Process according to any one of the preceding claims, the face arrangement including a metal base layer (30), the marking process comprising the step consisting in etching the metal base layer (30) in a zone (36) revealing a marking pattern, the etch going partway into the thickness of the metal base layer (30) and the process including a later step after the step of etching partway into the thickness, which later step consists in putting the mask in place directly over a distinct zone (162) of said etched zone revealing a marking pattern, such that the mask (70) prevents the coating layer (90) composed of a material chosen from the group consisting of palladium and of an alloy comprising at least 50% palladium by weight from being deposited directly over said distinct zone (62), and the step consisting in depositing the coating layer (90) composed of a material chosen from the group consisting of palladium and of an alloy comprising at least 50% palladium by weight directly over said etched zone revealing a marking pattern.

12. Process according to any one of Claims 1 to 10, the face arrangement including a metal base layer (30), the marking process comprising the step consisting in etching the metal base layer (30) in a zone (36) revealing a marking pattern, the etch going partway into the thickness of the metal base layer (30) and the process including a later step after the step of etching partway into the thickness, which later step consists in putting the mask in place directly over said etched zone revealing a marking pattern, such that the mask (70) prevents the coating layer (90) composed of a material chosen from the group consisting of palladium and of an alloy comprising at least 50% palladium by weight from being deposited directly over said etched zone, and the step consisting in depositing the coating layer (90) composed of a material chosen from the group consisting of palladium and of an alloy comprising at least 50% palladium by weight directly over a distinct zone of said etched zone revealing a marking pattern.

13. Process according to Claim 11 or Claim 12, **characterized in that** it comprises the preliminary step prior to the deposition of the coating layer (90) composed of a material chosen from the group consisting of palladium and of an alloy comprising at least 50% palladium by weight, which preliminary step consists in covering the metal base layer (30) with an intermediate metal layer (170), which intermediate metal layer covers said etched zone (36) revealing a marking pattern.

14. Process according to any one of Claims 11 to 13, **characterized in that** the face arrangement (10, 20, 30, 60, 90, 170) is the chip card electronic module connector (10, 20, 30, 70).

15. Process according to the preceding claim, **characterized in that** it comprises a step of chemically etching microgrooves (32) separating lands composing electrical contacts of the connector (10, 20, 30, 60, 90, 170) and a step prior to this step of chemically etching microgrooves (32) consisting in putting a mask (40) in place that protects distinct zones (33) from the etching of the microgrooves (32).

16. Process according to any one of Claims 11 to 15, **characterized in that** the etching of a zone (36) revealing a marking pattern is a chemical etch and the process comprises a step prior to the step of etching the zone (36) revealing a marking pattern, which prior step consists in putting a mask (160) in place on distinct zones of the zone (36) revealing a marking pattern, the mask protecting the distinct zones of the zone (36) revealing a marking pattern from the etch.

17. Process according to Claim 15 in combination with Claim 16, **characterized in that** the step of chemically etching the microgrooves (32) and the step of chemically etching the zone (36) revealing a marking pattern are distinct steps such that the mask (40, 160) put in place prior to one of the etches is removed before the mask (40, 160) prior to the other of the etches is put in place.
